# EUROPEAN PATENT APPLICATION

(11) **EP 1 447 584 A2**
(43) Date of publication of application: **18.08.2004**
(21) Application number: 04425049.6
(22) Date of filing: 28.01.2004
(51) Int. Cl.: F16D 55/224

(54) **Hydraulically and mechanically actuated disc brake**

(30) Priority: 31.01.2003 IT BS20030014 U
(71) Applicant: CORAM S.p.A., 25033 Cologne (Brescia) (IT)
(72) Inventor: Piantoni, Angelo, 25038 Rovato (Brescia) (IT)
(74) Representative: Crippa, Paolo Ernesto

(57) **Abstract**

The object of the present finding is a hydromechanical disc brake, particularly but not exclusively for light four-wheelers, comprising a single-bloc caliper body (11), an aperture (12) obtained in said body for housing two pads (13') arranged in parallel and sided at opposed sides to a portion of a brake disc (14), a hydraulic circuit (26,26',26") for actuating the brake by oil under pressure and mechanical components (22, 23) for a mechanical actuation of the brake as auxiliary or emergency braking system, characterised in that the hydraulic circuit and the mechanical components act on a single piston (20) to make the pads move closer and therefore cause the braking of the brake disc. The hydraulic circuit and the mechanical components act on a single piston (20) to move the pads closer and therefore cause the braking of the brake disc.

## Description

The present finding in general relates to disc brakes for motor vehicles, and in particular it refers to a hydro-mechanical brake for light four-wheelers.

As known, most motor vehicles are provided with two different braking systems; a main braking system, also called working or service system, which acts on the wheels of a vehicle, generally controlled by a pedal through a hydraulic or a compressed air circuit, and an auxiliary braking system, also called parking or emergency system, of the mechanical type since it is controlled by a series of levers and tie rods and acting on the vehicle rear wheels.

Various embodiments of disc brakes have been proposed, capable of combining in a single control unit a fluid mechanical control, typical of the main braking system, and a mechanical control, typical of the auxiliary braking system. For example, a former application for Utility Model No. MI98U000782 describes a disc brake wherein the fluid mechanical control and the mechanical control are respectively realised with at least one fluid mechanical piston and at least one mechanical pusher placed one inside the other and having, at least in one braking position, respective surfaces forcing the friction material and adjacent to each other.

In all of the known embodiments, however, the actuators relative to the two braking systems are separate, even though they are combined into a single structure.

Object of the present invention is that of proposing a hydro-mechanical disc brake, that is, capable of combining a hydraulic control and a mechanical control into a single unit, having a new and original structure, more compact and lighter than the similar brakes of the prior art, and realised with a smaller number of components.

Another object of the invention is that of providing a disc brake of the hydro-mechanical type provided with a single actuator controllable both hydraulically, for a device operation as main brake, and mechanically, for an operation as auxiliary brake.

Yet another object of the finding is that of providing a hydro-mechanical disc brake having a single-bloc body that allows an arrangement of the components required for the mechanical operation of the device according to two orientations orthogonal to one another according to the vehicle to which the brake will be fitted.

These and other objects and advantages of the finding are achieved by a hydro-mechanical disc brake conforming with the following claims.

Further details of the finding will appear more clearly from the following description, made with reference to the attached indicative and non-limiting drawings, wherein:

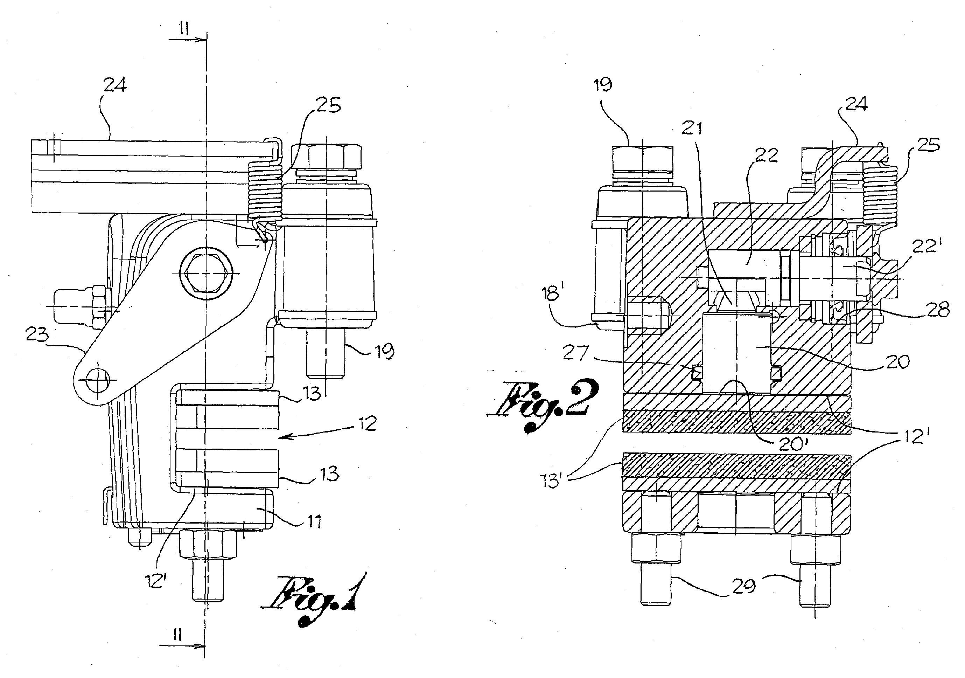

Fig. 1 shows a side view of the brake under discussion;

Fig. 2 shows a section view of the brake according to line II-II in Fig. 1;

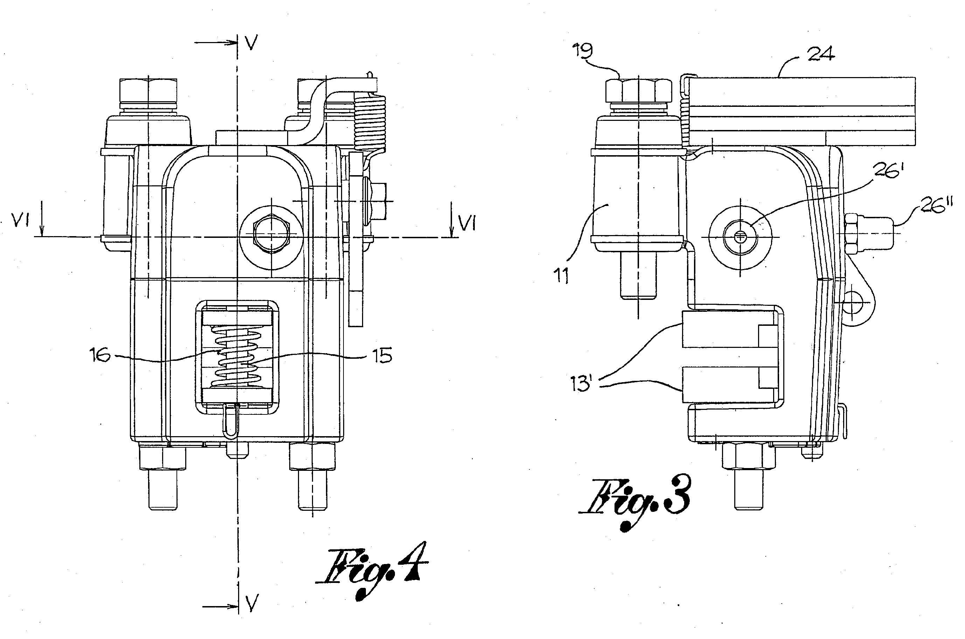

Fig. 3 shows a view of the brake seen from the side opposed to that of Fig. 1;

Fig. 4 shows a front view of the brake;

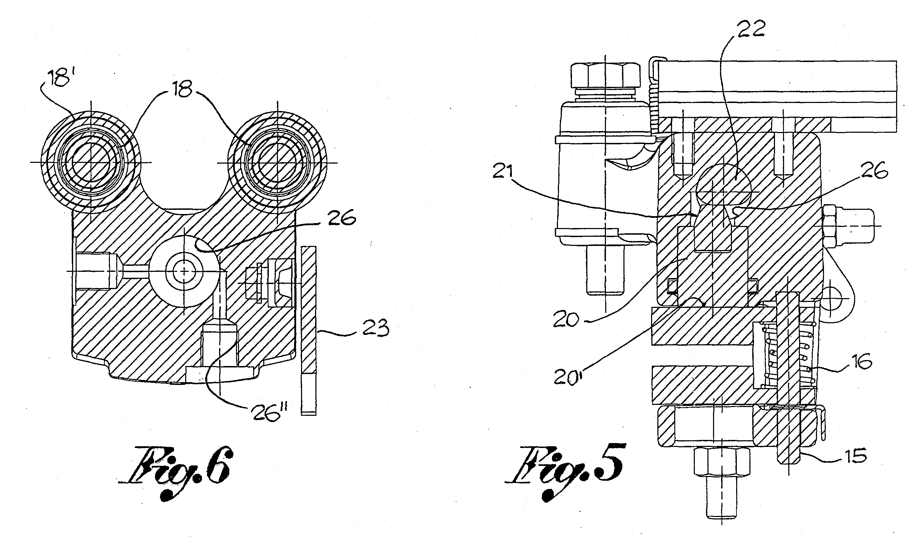

Fig. 5 shows a section view of the brake according to line V-V in Fig. 4;

Fig. 6 shows a section view of the brake according to line VI-VI in Fig. 4;

Fig. 7 shows a perspective view of the brake of the previous Figures; and

Fig. 8 shows a perspective view of the brake with a different arrangement of its mechanical actuating means.

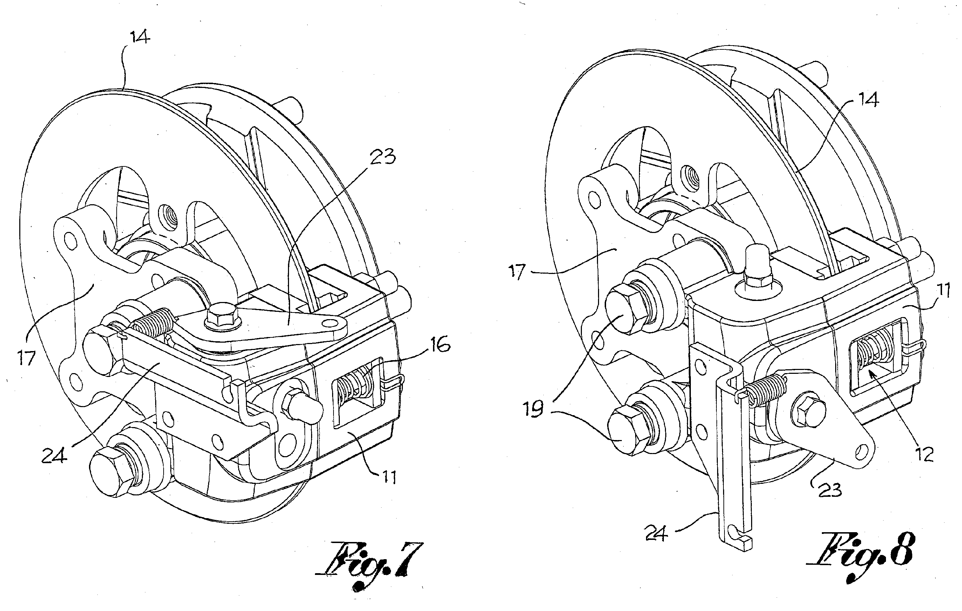

The disc brake under discussion comprises a single-bloc caliper body 11, totally made of aluminium, wherein there is obtained an aperture 12 delimited by parallel walls 12'. On each of said walls there is mounted a plate 13 carrying a friction material or pad 13', the two pads being sided at opposed sides to a brake disc 14 integral with the wheel to be braked (Figs. 7, 8). The caliper body 11 supports plates 13 by a single pin 15 around which there is mounted a helical return spring 16 exhibiting a dual conical profile. In turn, body 11 is constrained to a plate 17 integral to the vehicle chassis by fixed sliding bushes 18 locked to said plate by fastening screws 19. The caliper body 11 is shows floating on bushes 18 so as to partly slide on them, transversally relative to the brake disc 14. Suitable guards 18' are arranged between the sliding bushes 18 and body 11.

According to the finding, a single piston 20 is arranged into the caliper body 11, actuable both hydraulically and mechanically to push the friction material 13' against the brake disc 14. Piston 20 is oriented perpendicularly to plates 13 and acts by engaging one of them with one of its end surfaces 20'.

At the opposed side, piston 20 ends with a control head 21 interacting with a cam portion 22 of a pin 22' arranged into the caliper body 11, orthogonally to piston 20. At an end of pin 22' protruding from body 11 there is fastened an actuation lever 23 to which there is connected a tie rod or flexible cable (not shown) anchored to a reaction clip 24 fastened to and overhanging from body 11. The actuation lever 23 is controlled in contrast to a return spring 25 connecting the lever to the clip.

Between the cam portion 22 of pin 22' and the end of the piston ending with the control head 21 there is obtained a chamber 26 for the oil under pressure dispensed by a hydraulic circuit for the piston actuation. Chamber 26 communicates with said circuit by a feeding duct 26' and a venting duct 26" obtained in the caliper body 11, as it is clear in Fig. 6. The seal of said chamber, moreover, is obtained by gaskets 27, 28 fitted on piston 20 and on pin 22', respectively.

The braking system under discussion is completed by adjustment screws 29 adapted for gradually moving the two parallel walls 12a to which there are fitted plates 13 close to pads 13' for compensating the wear of the friction material and prevent an excessive stroke of piston 20.

The operation of the proposed brake is evident. When the auxiliary braking system is actuated by the hand brake lever, the flexible cable turns the actuation lever 23 and thereby pin 22'. Its cam portion 22, turning, pushes piston 20 thereby causing the approach of the pads and the braking of the brake disc 14.

On the other hand, when the main braking system is actuated by a pedal, the advance movement of piston 20, and thereby the approach of the pads, is caused by the pressure of the oil into chamber 26.

The main and the auxiliary braking systems therefore use the same pusher component 20 to cause the braking action. This thanks to the particular structure of the brake that allows said piston 20 to be actuated indifferently by a hydraulic circuit or by mechanical components.

This causes a reduction of the brake weight and overall dimensions, with the possibility of using pads of smaller surface, a single pin for their support and therefore a smaller number of components compared to the current hydro-mechanical brakes.

Finally, it should be noted that the particular simplicity of the structure of the brake under discussion allows fitting the mechanical components in two orientations orthogonal to one another, that is with the actuation lever on the side or the head relative to the caliper body 11, as shown in Figs. 7 and 8, so as to better adjust the braking system to the structure of the vehicle on which it is fitted.

## Claims

1. Hydro-mechanical disc brake, particularly but not exclusively for light four-wheelers, comprising a single-bloc caliper body (11), an aperture (12) obtained in said body for housing two pads (13') arranged in parallel and sided at opposed sides to a portion of a brake disc (14), a hydraulic circuit (26,26',26") for actuating the brake by oil under pressure and mechanical components (22, 23) for a mechanical actuation of the brake as auxiliary or emergency braking system, **characterised in that** the hydraulic circuit and the mechanical components act on a single piston (20) to make the pads move closer and therefore cause the braking of the brake disc.

2. Disc brake according to claim 1, wherein said piston is arranged completely inside the caliper body, orthogonally to the pads and with an end surface (20') engaging against one of them.

3. Disc brake according to claim 2, wherein from the piston end opposed to that engaging against a pad there extends a control head (21) facing towards and interacting with a cam portion (22) of a pin (22') turnably fitted into the caliper body, orthogonally to the piston.

4. Disc brake according to claim 3, wherein the piston end carrying the control head and the cam portion of the pin there is obtained a chamber (26) for the oil under pressure for the hydraulic actuation of the piston, in the caliper body there being obtained a feeding duct and a venting duct for the oil.

5. Disc brake according to claim 4, wherein the chamber for the oil under pressure is made sealed by sealing gaskets (27, 28) provided around the piston (20) and around the pin (22').

6. Disc brake according to any one of claims 3-5, wherein an end of the pin protrudes outside the caliper body, and wherein an actuation lever (23) is fastened to said end, controllable in rotation by a tie rod or flexible cable anchored to a reaction clip (24) fastened to and overhanging from the caliper body.

7. Disc brake according to claim 6, wherein the rotation of the actuation lever is contrasted by an elastic member (25) connecting the lever to the reaction clip.

8. Brake disc according to any one of the previous claims, wherein the pads are supported by a single pin (15) around which there is mounted a helical return spring (16) exhibiting a dual conical profile.

9. Disc brake according to any one of the previous claims, wherein the single-bloc caliper body is provided for an assembly of the mechanical brake actuating components according to two orientations orthogonal to one another for the brake adaptation to the structure of the vehicle on which it is fitted.

10. Hydro-mechanical disc brake, substantially as described, illustrated and claimed above for the specified objects.
